# FASCICULE DE BREVET EUROPEEN

(11) **EP 1 476 502 B1**
(45) Date de publication et mention de la délivrance du brevet: **31.03.2010**
(21) Numéro de dépôt: 03720634.9
(22) Date de dépôt: 21.02.2003
(51) Int. Cl.: C08K 3/32, C08J 5/18

(54) **MATERIAU THERMOPLASTIQUE A PROPRIETES BARRIERES ELEVEES**
THERMOPLASTISCHES MATERIAL MIT VERBESSERTEN BARRIEREEIGENSCHAFTEN
THERMOPLASTIC MATERIAL WITH HIGH BARRIER PROPERTIES

(30) Priorité: 22.02.2002 FR 0202266
(43) Date de publication de la demande: 17.11.2004
(73) Titulaire: Rhodianyl, 92512 Boulogne-Billancourt Cédex (FR)
(72) Inventeur: DUPUY, Carole, B-1000 BRUXELLES (BE); ECHALIER, Bruno, F-75006 PARIS (FR); EGRET, Hélène, F-76000 ROUEN (FR); LOUSTEAU, Bertrand, F-75018 PARIS (FR); MATHIEU, Olivier, 69970 MARENNES (FR)
(74) Mandataire: Valentino, Cédric
(86) Numéro de dépôt international: PCT/FR2003/000584
(87) Numéro de publication internationale: WO 2003/070818

(56) Documents cités:
- WO-A-99/47598
- DATABASE WPI Section Ch, Week 200123 Derwent Publications Ltd., London, GB; Class A23, AN 2001-226389 XP002216322 & JP 2001 031845 A (KURARAY CO LTD), 6 février 2001 (2001-02-06)

## Description

La présente invention se rapporte au domaine des matériaux à propriété barrière élevée, en particulier au domaine des matériaux comprenant une matrice thermoplastique et une charge et plus particulièrement au domaine des matériaux à propriété barrière élevée appelés ci-après matériaux barrières, comprenant une matrice thermoplastique et une charge dispersée sous la forme de nanoparticules à facteur de forme.
Les matériaux barrières de l'invention peuvent être utilisés dans diverses applications. En particulier dans le domaine de l'emballage alimentaire, cosmétique, dans le domaine de transport et de stockage de liquides tels que les essences.

L'utilisation des résines thermoplastiques chargées comme matériaux barrières est connue. On peut citer à titre indicatif la demande de brevet (KOKAI) N° 5-293916 qui décrit l'utilisation pour le transport de fuel d'un tube multi-couches à base de polyamide contenant de 1,5 à 10 % en poids de silicate. De même la demande de brevet N° EP 1044806 décrit un tube multi-couches comprenant au moins trois couches thermoplastiques dont une est en polyamide contenant de 0,05 à 30 % en poids de silicate.
Les matériaux barrières tels que décrits précédemment sont colorés et de ce fait ne peuvent pas être utilisés dans l'emballage et en particulier l'emballage alimentaire.
Le problème que la demanderesse a cherché à résoudre est de trouver un matériau barrière non coloré et de préférence transparent, ayant des bonnes propriétés mécaniques en particulier un bon compromis module/choc et une tenue thermique permettant sa manipulation à haute température.
La demanderesse a trouvé une nouvelle famille de matériaux présentant un bon compromis des propriétés décrites précédemment pouvant donc être utilisée comme matériaux barrières dans l'emballage, le stockage de produits tels que produits alimentaires et le stockage et transport de liquides tels que les essences comme le fuel. Par matériau barrière on entend un matériau qui présente une perméabilité réduite vis-à-vis d'un fluide. Selon la présente invention, le fluide peut être un gaz ou un liquide. Parmi les gaz auxquels le matériau présente une perméabilité faible on peut citer notamment l'oxygène, le dioxyde de carbone et la vapeur d'eau. Un matériau barrière à l'oxygène et au dioxyde de carbone peut présenter un avantage considérable par exemple pour des applications dans le domaine de l'emballage, en particulier l'emballage de denrées alimentaires.
Comme liquides auxquels le matériau doit être imperméable on peut citer les solvants, notamment les solvants représentatifs des essences tels que le méthanol, le toluène, l'isooctane. Les matériaux imperméables aux solvants et aux essences sont particulièrement intéressants notamment pour des applications dans le domaine de l'automobile, notamment pour la fabrication des réservoirs à essence ou les conduites de carburants.
Le matériau barrière de l'invention comprend comme principal constituant une matrice comprenant un polymère thermoplastique.
A titre d'exemple de polymères thermoplastiques convenables pour l'invention on peut citer : les polylactones telles que la poly(pivalolactone), la poly(caprolactone) et les polymères de la même famille; les polyuréthanes obtenus par réaction entre des diisocyanates comme le 1,5-naphtalène diisocyanate; le p-phénylène diisocyanate, le m-phénylène diisocyanate, le 2,4-toluène diisocyanate, le 4,4'-diphénylméthane diisocyanate, le 3,3'-diméthyl-4,4'-diphényl-méthane diisocyanate, le 3,3-'diméthyl-4,4'-biphényl diisocyanate, le 4,4'-diphénylisopropylidène diisocyanate, le 3,3'-diméthyl-4,4'-diphényl diisocyanate, le 3,3'-diméthyl-4,4'-diphénylméthane diisocyanate, le 3,3'-diméthoxy-4,4'-biphényl diisocyanate, le dianisidine diisocyanate, le toluidine diisocyanate, le héxaméthylène diisocyanate, le 4,4'-diisocyanatodiphénylméthane et composés de la même famille et les diols à longues chaînes linéaires comme le poly(tétraméthylène adipate), le poly(éthylène adipate), le poly(1,4 -butylène adipate), le poly(éthylène succinate), le poly(2,3-butylène succinate), les polyéther diols et composés de la même famille; les polycarbonates comme le poly[méthane bis(4-phényl) carbonate], le poly[1,1-éther bis(4-phényl) carbonate], le poly[diphénylméthane bis(4-phényl)carbonate], le poly[1,1-cyclohexane bis(4-phényl)carbonate] et polymères de la même famille; les polysulfones; les polyéthers; les polycétones; les polyamides comme le poly(4-amino butyrique acide), le poly(héxaméthylène adipamide), le poly(acide 6-aminohéxanoïque), le poly(m-xylylène adipamide), le poly(p-xylylène sébacamide), le poly(2,2,2-triméthyl héxaméthylène téréphtalamide), le poly(métaphénylène isophtalamide), le poly(p-phénylène téréphtalamide), et polymères de la même famille; les polyesters comme le poly(éthylène azélate), le poly(éthylène-1,5-naphtalate, le poly(1,4-cyclohexane diméthylène téréphtalate), le poly(éthylène oxybenzoate), le poly(para-hydroxy benzoate), le poly(1,4-cyclohéxylidène diméthylène téréphtalate), le poly(1,4-cyclohéxylidène diméthylène téréphtalate), le polyéthylène téréphtalate, le polybutylène téréphtalate et les polymères de la même famille; les poly(arylène oxydes) comme le poly(2,6-diméthyl-1,4-phénylène oxyde), le poly(2,6-diphényl-1,4-phénylène oxyde) et les polymères de la même famille ; les poly(arylène sulfides) comme le poly(phénylène sulfide) et les polymères de la même famille; les polyétherimides; les polymères vinyliques et leurs copolymères comme l'acétate de polyvinyle, l'alcool polyvinylique, le chlorure de polyvinyle; le polyvinyle butyral, le chlorure de polyvinylidène, les copolymères éthylène- acétate de vinyle, et les polymères de la même famille; les polymères acryliques, les polyacrylates et leurs copolymèrés comme l'acrylate de polyéthyle, le poly(n-butyl acrylate), le polyméthylméthacrylate, le polyéthyl méthacrylate, le poly(n-butyl méthacrylate), le poly(n-propyl méthacrylate), le polyacrylamide, le polyacrylonitrile, le poly(acide acrylique), les copolymères éthylène-acide acrylique, les copolymères éthylène- alcool vinylique, les copolymères de l'acrylonitrile, les copolymères méthacrylate de méthyle -styrène , les copolymères éthylène-acrylate d'éthyle, les copolymères méthacrylate-butadiène-styrène, l'ABS, et les polymères de la même famille; les polyoléfines comme le poly(éthylène) basse densité, le poly(propylène), le poly(éthylène) chloré basse densité, le poly(4-méthyl-1-pentène), le poly(éthylène), le poly(styrène), et les polymères de la même famille; les ionomères; les poly(épichlorohydrines); les poly(uréthane) tels que produits de polymérisation de diols comme la glycérine, le triméthylol-propane, le 1,2,6-hexanetriol, le sorbitol, le pentaérythritol, les polyéther polyols, les polyester polyols et composés de la même famille avec des polyisocyanates comme le 2,4-tolylène diisocyanate, le 2,6-tolylène diisocyanate, le 4,4'-diphénylméthane diisocyanate, le 1,6-héxaméthylène diisocyanate, le 4,4'-dicycohéxylméthane diisocyanate et les composés de la même famille; et les polysulfones telles que les produits de réaction entre un sel de sodium du 2,2-bis(4-hydroxyphényl) propane et de la 4,4'-dichlorodiphényl sulfone; les résines furannes comme le poly(furanne); les plastiques cellulose-ester comme l'acétate de cellulose, l'acétate-butyrate de cellulose, propionate de cellulose et les polymères de la même famille; les silicones comme le poly(diméthyl siloxane), le poly(diméthyl siloxane cophénylméthyl siloxane), et les polymères de la même famille; les mélanges d'au moins deux des polymères précédents.
Parmi ces polymères thermoplastiques, on préfère tout particulièrement les polyamides, les polyamides semi-aromatiques, le PVC(polychlorure de vinyle), le PET (polyéthylène téréphtalate), le PPO (polypropylène oxyde), le polystyrène, le polyméthylméthacrylate, les copolyoléfines telles que l'EVA (polyéthylèlène d'alcool vinylique), les mélanges et copolymères à base de ces (co)polymères
Selon un mode de réalisation préférentiel de l'invention, la matrice thermoplastique est un polyamide choisi dans le groupe comprenant le polyamide 6, le polyamide 66, le polyamide 11, le polyamide 12, les mélanges et copolymères à base de ces polyamides. Selon un mode de réalisation préférentiel de l'invention, le matériau barrière de l'invention est obtenu par introduction dans la matrice ou dans le milieu de polymérisation de la matrice d'un composé à base de phosphate de zirconium et/ou de titane présentant une distance interfeuillets inférieure ou égale à 15Å et des feuillets élémentaires présentant un facteur de forme supérieur ou égal à 250.

Par facteur de forme on entend le rapport entre la plus grande dimension des feuillets de phosphate de zirconium ou de titane et l'épaisseur du feuillet élémentaire ou de l'agglomérat de feuillets. Cette épaisseur du feuillet élémentaire est déterminée par les techniques d'analyse cristallographique, la plus grande dimension d'un feuillet étant déterminée par analyse par microscopie électronique à transmission (MET).

Le facteur de forme des particules dispersées dans la matrice sera d'autant plus proche du facteur de forme de feuillet élémentaire que le pourcentage d'exfoliation en feuillets en feuillets élémentaires sera proche de 100%.

Le composé à base de phosphate de zirconium et/ou de titane, introduit dans la matrice présente de préférence une distance interfeuillets inférieure ou égale à 13Å.

Ce composé à base de phosphate de zirconium et/ou de titane comprend un composé minéral ou organique comprenant au moins une fonction susceptible de réagir avec les fonctions acides du phosphate de zirconium et/ou de titane.

Par exemple un tel composé minéral ou organique peut être sous la forme d'un cation. Comme composé minéral sous forme cationique on peut citer à titre d'exemple des cations métalliques, des cations alcalins tels que Na⁺, K⁺, Li⁺, l'ion ammonium NH₄⁺. Sans vouloir se lier à une quelconque théorie, on pense que de tels cations peuvent être échangés avec les protons du phosphate de zirconium et/ou de titane.

Un cation tel que Na⁺, K⁺, Lis ou NH₄⁺ correspond à une fonction susceptible de réagir avec les fonctions acides du phosphate de zirconium et/ou de titane.

De préférence le composé minéral est l'ion Na⁺.

Selon un mode de réalisation particulier de l'invention, le composé minéral ou organique comprend une fonction susceptible de réagir avec les fonctions acides du phosphate de zirconium et/ou de titane.

Cette fonction peut être une fonction basique. Comme fonction basique on peut citer par exemple la fonction amine. La fonction peut par exemple être sous une forme neutre ou chargée positivement.

Selon un mode préférentiel le composé organique est une monoamine. Il peut s'agir par exemple d'une monoamine aliphatique telle que la n-butylamine.

Selon un autre mode avantageux, le composé organique est un aminoacide ou un lactame. On peut citer par exemple le caprolactame.

Selon un autre mode de réalisation particulier de l'invention, le composé minéral ou organique comprend deux fonctions susceptibles de réagir avec les fonctions acides du phosphate de zirconium et/ou de titane.

En particulier le composé organique est un composé selon la formule (I) suivante :

A-R-B (I)

dans laquelle :
A et B sont des fonctions, identiques ou différentes, susceptibles de réagir avec les fonctions acides du phosphate de zirconium et/ou de titane,
R est un radical hydrocarboné aliphatique, cycloaliphatique ou aromatique, substitué ou non, comprenant de 2 à 20 atomes de carbone, et pouvant comprendre des hétéroatomes
Le composé de formule (I), présent dans le composé à base de phosphate de zirconium et/ou de titane, comprend deux fonctions A et B susceptibles de réagir avec les fonctions acides du phosphate de zirconium et/ou de titane.
Les fonctions A et B peuvent par exemple être des fonctions basiques susceptibles de réagir avec les protons du phosphate de zirconium et/ou de titane. Les fonctions A et B se présentent de préférence sous une forme neutre ou chargée positivement. A titre d'exemple de fonctions A et B pouvant convenir pour l'invention, on peut citer les amines, les ammoniums, les phosphoniums.
De manière générale, le radical R n'est pas réactif vis-à-vis des fonctions acides du phosphate de zirconium et/ou de titane, ni vis-à-vis du phosphate en général.
Selon un mode préférentiel de l'invention, les fonctions A et B sont des fonctions amines. De préférence le composé (I) est choisi parmi l'hexaméthylène diamine, la méthyl-2-pentaméthylène diamine, la métaxylène diamine.
Selon un mode de réalisation particulier de l'invention, le rapport molaire α.
entre le nombre de moles de fonctions susceptibles de réagir du composé minéral ou organique et le nombre de moles du phosphate de zirconium et/ou de titane est compris entre 0,1 et 0,8.
Par nombre de moles de fonctions susceptibles de réagir, on entend la somme du nombre de moles de chaque fonction du composé minéral ou organique susceptible de réagir. Par exemple pour un composé comprenant une seule fonction susceptible de réagir, le nombre de moles de fonctions susceptibles de réagir correspond au nombre de moles du composé. Pour un composé comprenant deux fonctions susceptibles de réagir, le nombre de moles de fonctions susceptibles de réagir correspond à deux fois le nombre de moles du composé.
Par nombre de moles du phosphate de zirconium et/ou de titane, on entend le nombre de moles d'élément phosphore. Par exemple une mole de composé de phosphate de zirconium correspond en général à deux moles d'élément phosphore.
De préférence le rapport molaire α est compris entre 0,4 et 0,6. Avantageusement le rapport molaire α est sensiblement égal à 0,5.

Selon une variante particulière de l'invention, le composé à base de phosphate de zirconium et/ou de titane présentant une distance interfeuillets inférieure ou égale à 15Å est obtenu par le procédé comprenant les étapes successives suivantes :
a) Précipitation en milieu acide d'un composé à base de phosphate de zirconium et/ou de titane, à partir d'acide phosphorique et d'un composé du zirconium et/ou d'un composé à base de titane ou de composés mixtes à base de titane et de zirconium, le titane et/ou le zirconium étant au degré d'oxydation IV
b) Cristallisation du composé
c) Traitement du composé cristallisé, en milieu liquide, à pH compris entre 3 et 9.
Le procédé de préparation selon l'invention comprend au moins les trois étapes successives a), b), et c). Il peut comporter d'autres étapes ou phases de procédé avant, après ou entre ces étapes. Il s'agit par exemple de phases de lavage, de purification, de filtration, de dilution, de centrifugation, d'ajout de composés afin de réguler certains paramètres de procédé comme le pH, la force ionique. La mise en oeuvre de telles phases de procédé apparaîtra notamment au vu des exemples qui sont présentés ci-dessous.
L'étape a) consiste en une précipitation d'un composé à base de phosphate de zirconium et/ou de titane. La préparation de tels précipités est connue de l'homme du métier. Elle est effectuée à partir d'acide phosphorique et d'un composé du zirconium et/ou d'un composé du titane, le zirconium et/ou le titane étant au degré d'oxydation IV. On cite les tétra-halogénures de zirconium et/ou de titane, les oxyhalogénures de zirconium et/ou de titane, en particulier l'oxychlorure de zirconium et l'oxychlorure de titane. On peut également utiliser des composés mixtes à base de zirconium et de titane
Un bilan de la réaction de précipitation, simplifié, est par exemple le suivant:

2 H₃P0₄ + ZrOCl₂ → Zr(H⁺, PO₄³⁻)₂ + 2 HCl

La précipitation est de préférence réalisée en milieu aqueux. L'utilisation de l'acide phosphorique induit une acidité du milieu de précipitation. On peut avantageusement réaliser la précipitation à pH acide, de préférence contrôlée, par exemple compris entre 0,5 et 2. On peut utiliser à cet effet, en complément des précurseurs du précipité, un acide. On cite à titre d'exemple l'acide chlorhydrique.
Le précipité peut cristalliser en une structure lamellaire, à température ambiante, sans qu'il soit nécessaire d'effectuer une opération de cristallisation distincte de l'étape de précipitation.
Il peut être toutefois avantageux de mettre en oeuvre une étape de cristallisation distincte. Une telle étape permet d'obtenir pour le composé précipité une structure lamellaire plus marquée et/ou plus régulière. La cristallisation peut être mise en oeuvre par traitement à chaud dans de l'eau ou dans une solution aqueuse, par exemple par immersion du composé dans de l'eau à une température comprise entre 100°C et 200°C. La cristallisation est de préférence réalisée dans une solution aqueuse acide, par exemple une solution d'acide phosphorique. La durée de cristallisation peut être de plusieurs heures.
L'étape de cristallisation est avantageusement précédée d'une phase de lavage du précipité, permettant notamment d'éliminer les espèces ioniques issues de la réaction de précipitation.
L'étape de cristallisation est avantageusement suivie d'une phase de lavage et centrifugation. Selon une caractéristique préférée, le pH mesuré dans la phase aqueuse d'une dispersion comprenant le composé cristallisé, à 20% en poids en extrait sec, est compris entre 0,5 et 2.
Selon une caractéristique préférée du procédé, toutes les étapes du procédé sont ainsi réalisées à pH acide, compris entre 0,5 et 2. Selon une autre caractéristique préférée le composé lamellaire n'est jamais séché, les seules opérations d'élimination d'eau étant des opérations de filtration ou de centrifugation. On entend ici par opération de séchage, une opération au cours de laquelle le composé est introduit dans une atmosphère chaude et dépourvue d'eau, pendant une durée supérieure à 15 minutes, par exemple dans une étuve.
Le composé cristallise dans la phase α du phosphate de zirconium. La structure de cette phase a par exemple été décrite dans J. Inorg. Nucl. Chem vol 26, p 117-129. Cette phase présente une structure lamellaire, avec des protons intercalés entre les lamelles. Sans vouloir se lier à une quelconque théorie, on pense que ces protons peuvent être échangés par une espèce chimique chargée positivement.
L'étape de traitement c) consiste à traiter le composé, cristallisé, en milieu liquide, à un pH compris entre 3 et 9.
Le milieu liquide est de préférence une solution aqueuse, dans laquelle le composé à base de phosphate de zirconium est dispersé. La solution aqueuse comprend un composé minéral ou organique de nature et/ou en quantité telles que le pH soit compris entre 3 et 9. Selon une caractéristique préférentielle, le pH est compris entre 4 et 7.
Le composé minéral ou organique est choisi parmi les composés qui, en solution aqueuse, présentent un pH supérieur à 3, de préférence supérieur à 7.
Le composé est généralement le composé de formule (I) décrit ci-dessus, correspondant au composé à base de phosphate de zirconium et/ou de titane que l'on souhaite préparer. L'emploi de ces composés organiques peut être tout particulièrement indiqué pour l'utilisation du composé à structure lamellaire pour le renfort des polyamides.
Selon un mode préférentiel de réalisation du second objet de l'invention, le composé organique est l'hexaméthylène diamine.
A titre d'exemple, le composé minéral pour le traitement à pH compris entre 2 et 7 peut également être choisi parmi les hydroxydes de métaux, d'alcalins, ou d'alcalino-terreux, par exemple l'hydroxyde de sodium; les composés minéraux de l'ion ammonium, comme l'hydroxyde d'ammonium; les cations lithium, sodium, potassium en présence éventuellement d'un agent basique. Le composé organique peut être par exemple le caprolactame ou l'ammoniaque. Ces composés peuvent être indiqués pour l'utilisation du composé à structure lamellaire pour le renfort des polyamides.
Après l'étape de traitement, le composé peut être lavé et/ou séparé du milieu liquide, par exemple par filtration, évaporation du milieu liquide, de préférence évaporation d'eau. Il peut être également séché.
Le composé minéral ou organique de l'étape de traitement c) est choisi de manière adéquate en fonction du composé à base de phosphate de zirconium et/ou de titane que l'on souhaite préparer.
On obtient ainsi un composé minéral à structure lamellaire pouvant s'exfolier facilement en des particules plaquettaires. Le composé peut être conditionné sous différentes formes. Il peut être conditionné sous forme de poudre, après élimination du milieu liquide, et éventuellement séchage. Il peut être conditionné sous forme d'une dispersion dans un milieu liquide, par exemple de l'eau.
La forme du conditionnement dépend généralement de l'utilisation à laquelle il est destiné. Ainsi, pour l'utilisation pour le renfort de polymères synthétiques, le composé peut être avantageusement introduit sous forme d'une dispersion dans le milieu de synthèse du polymère. De préférence le composé est introduit sous forme de dispersion dans le milieu contenant les monomères à l'origine du polymère synthétique.
Le matériau barrière de l'invention, outre la matrice thermoplastique et le composé à base de phosphate de zirconium et/ou de titane, peut également comprendre d'autres additifs, tels que par exemple des stabilisants, plastifiants, ignifugeants, colorants, lubrifiants, catalyseurs. Cette liste n'a aucun caractère limitatif. Il peut en outre comprendre d'autres additifs de renfort tels que des modificateurs de la résistance aux chocs tels que des élastomères éventuellement greffés, des renforts minéraux tels que les argiles, kaolin, des renforts fibreux tels que les fibres de verre, les fibres d'aramides, les fibres de carbone.
Toute méthode permettant d'obtenir une dispersion de composés dans un matériau macromoléculaire peut être utilisée pour réaliser la composition. Un premier procédé consiste à mélanger le composé lamellaire dans un matériau thermoplastique sous forme fondue et à éventuellement soumettre le mélange à un cisaillement important, par exemple dans un dispositif d'extrusion bi-vis, afin de réaliser une bonne dispersion. Un autre procédé consiste à mélanger le composé à disperser aux monomères dans le milieu de polymérisation, puis à effectuer la polymérisation. Un autre procédé consiste à mélanger à un polymère thermoplastique sous forme fondue, un mélange concentré d'un polymère thermoplastique et de particules dispersées, préparé par exemple selon l'un des procédés décrits précédemment.
Il n'y a pas de limitation à la forme sous laquelle le composé lamellaire est introduit dans le milieu de synthèse du composé macromoléculaire, ou dans un polymère thermoplastique fondu. Il peut par exemple être introduit sous forme de poudre solide ou sous forme de dispersion dans de l'eau ou dans un dispersant organique.
Dans le cadre de matériaux barrière à base de polyamide, un mode de réalisation avantageux consiste à introduire dans le milieu de polymérisation une dispersion dans de l'eau du composé lamellaire à base de phosphate de zirconium. En particulier la dispersion peut être introduite dans le milieu comprenant les monomères du polyamide à fabriquer. Les procédés de polymérisation mis en oeuvre dans le cadre de ce mode de réalisation sont les procédés usuels.
La proportion en poids du composé lamellaire dans la composition est de préférence inférieure ou égale à 5 %.
Selon un mode de réalisation préférentiel de l'invention, au moins une partie du composé à base de phosphate de zirconium et/ou de titane est dispersé sous forme de feuillets dans la matrice.
Le composé à base de phosphate de zirconium et/ou de titane de l'invention présente avantageusement des feuillets élémentaires présentant un facteur de forme supérieur ou égal à 500.
L'invention concerne également des articles obtenus par mise en forme du matériau barrière de l'invention, par exemple par moulage, extrusion, injection, extrusion soufflage. Les articles préférés de l'invention sont notamment les films, les tubes, les corps creux, les réservoirs. Ces articles peuvent être utilisés dans de nombreux domaines tels que l'automobile ou l'emballage et dans de nombreuses applications, telles que les conduites ou réservoirs pour carburants, les films pour emballage de denrées alimentaires etc.
D'autres détails ou avantages de l'invention apparaîtront plus clairement au vu des exemples ci-dessous donnés uniquement à titre indicatif.

### Exemple 1-: Préparation d'un composé à base de phosphate de zirconium cristallisé.

On utilise les réactifs suivants:
- acide chlorhydrique (Prolabo 36 % d =1.19)
- acide phosphorique (prolabo 85 % d=1.695)
- eau désionisée
- oxychlorure de zirconium (sous forme poudre) à 32.8% en ZrO₂.

### Etape a): précipitation

On prépare au préalable une solution aqueuse d'oxychlorure de zirconium à 2,1 mol/L en ZrO₂.

Dans un réacteur agité de 1 litre on ajoute à température ambiante les solutions suivantes :
- Acide chlorhydrique 50 ml
- Acide phosphorique 50 ml
- Eau désionisée 150 ml

Après agitation du mélange on ajoute de façon continue avec un débit de 5.7 mL/min 140 mL de la solution aqueuse d'oxychlorure de zirconium à 2.1 M.
L'agitation est maintenue pendant 1 heure après la fin d'ajout de la solution d'oxychlorure de zirconium.
Après élimination des eaux-mères on lave le précipité par centrifugation à 4500 t/min, avec 1200 ml de H₃PO₄ 20 g/L puis avec de l'eau désionisée, jusqu'à atteindre une conductivité de 6.5 mS (surnageant). On obtient un gâteau du précipité à base de phosphate de zirconium.

### Etape b): Cristallisation

Le gâteau est dispersé dans 1 litre de solution aqueuse d'acide phosphorique 10 M, la dispersion ainsi obtenue est transférée dans un réacteur de 2litres puis chauffée à 115 °C. Cette température est maintenue pendant 5 heures.
La dispersion obtenue est lavée par centrifugation avec de l'eau désionisée jusqu'à une conductivité inférieure à 1 mS (surnageant). Le gâteau issu de la dernière centrifugation est redispersé de façon à obtenir un extrait sec voisin de 20 %, le pH de la dispersion est compris entre 1 et 2.
On obtient une dispersion d'un composé cristallisé à base de phosphate de zirconium, dont les caractéristiques sont les suivantes:
- Taille et morphologie des particules : L'analyse au Microscope Electronique à Transmission (MET) met en évidence l'obtention d'une structure lamellaire dont les lamelles présentent une forme hexagonale avec une taille comprise entre 200 et 500 nm. Les particules sont constituées d'un empilement de plaquettes sensiblement parallèles, l'épaisseur des empilements selon la direction perpendiculaire aux plaquettes étant d'environ 200 nm.
- L'analyse DRX met en évidence l'obtention de la phase cristallisée
- Zr(HPO₄)₂, 1 H₂0
- Extrait Sec: 18,9% (en poids)
- pH : 1,8
- Conductivité : 8 mS

### Exemples 2-3: Traitement du composé par une base minérale (Etape c)

805 g (en extrait sec) de produit issu de l'exemple 1 sont centrifugés. Le culot de centrifugation est redispersé dans une solution aqueuse de soude à 10⁻³ mol/L (500 ml). Trois lavages sont effectués suivant ces mêmes conditions. Le gâteau issu de la dernière centrifugation est redispersé dans 500 mL de solution de soude à 10⁻³ mol/L. Le pH est ajusté à 5 (exemple 2) ou à 3 (exemple 3) par ajout de soude 8 mol/L. La dispersion est centrifugée et le culot est redispersé dans 300 mL d'eau épurée (extrait sec: 30 % en poids). La conductivité finale de la suspension est inférieure à 1 mS.

### Exemple 4: Traitement du composé par une base organique (Etape c)

Le produit issu de l'exemple 1 est neutralisé par ajout d'héxaméthylène diamine: A la dispersion on ajoute une solution aqueuse de HMD à 70% jusqu'à obtention d'un pH de 5. La dispersion ainsi obtenue est homogénéisée à l'aide d'un Ultraturax. L'extrait sec final est ajusté par ajout d'eau désionisée (extrait sec: 15 % en poids).

### Exemple 5: Traitement du composé par du caprolactame (Etape c)

On incorpore du caprolactame dans le sol minéral obtenu selon l'exemple 1 (33% en poids de caprolactame par rapport à l'extrait sec). Le pH mesuré dans la solution est de 3,3. Puis par distillation de l'eau, on récupère une poudre contenant la fraction correspondante de caprolactame.

### Exemples 6 à 8 : Matériau barrière comprenant des particules plaquettaires à base de phosphate de zirconium.

On synthétise un polyamide 6 à partir de caprolactame selon un procédé classique, en introduisant dans le milieu de polymérisation une dispersion aqueuse obtenue à l'exemple 4. La proportion de composé à base de phosphate de zirconium introduite est de 2,6 (exemple 7) et 4,2 % (exemple 8) en poids par rapport à la masse totale du matériau. On synthétise également un polymère ne comportant pas le composé à base de phosphate de zirconium (exemple 6, comparatif).
Après polymérisation, le polymère est mis en forme de granulés. Ceux ci sont lavés pour éliminer le caprolactame résiduel. Dans ce but, les granulés sont immergés dans un excès d'eau à 90°C pendant quelques heures puis sont séchés sous vide primaire (< 0.5 mbar) pendant 16 heures à 110°C.

### Propriétés mécaniques

Différents tests ont été réalisés sur les matériaux selon les méthodes de mesure indiquées ci-dessous pour déterminer les propriétés mécaniques des matériaux :
- Contrainte à la rupture mesurée selon la norme ISO 527après conditionnement de l'éprouvette à 23°C et à une humidité relative de 50%.
- Module de traction mesuré selon la norme ISO 527 après conditionnement de l'éprouvette à 23°C et à une humidité relative de 50%.
- Module de flexion mesuré selon la norme ISO 178 après conditionnement de l'éprouvette à 23°C et à une humidité relative de 50%.
- Température de déformation sous charge (HDT-Heat Déflection Temperature) mesurée selon la norme ISO 75, sous charge de 1,81 N/mm².

Les différentes compositions et les évaluations sont présentées dans le tableau 1 ci-dessous.

**Tableau 1**

| **Exemples** | **6 (comparatif)** | **7** |
|---|---|---|
| Proportion en poids de composé de phosphate de zirconium (%) | 0 | 2,6 |
| Contrainte à la rupture (N/mm²) | 48 | 101 |
| Module de traction (Wmm²) | 3000 | 3900 |
| Module de flexion (N/mm²) | 2900 | 3800 |
| HDT sous charge de 1,81 N/mm² (4°C) | 52 | 76 |

On obtient un matériau à base de polyamide dont la contrainte à la rupture, le module et la température de déformation sous charge sont supérieurs à ceux d'un polyamide ne comprenant pas le composé minéral.

### Préparation de films

Les granulés de polymère ci-dessus sont mis en forme par extrusion sur un appareillage de marque CMP.

Les caractéristiques de la mise en oeuvre sont les suivantes :
- température de l'extrudeuse : entre 260 et 290°C
- vitesse de vis : 36rpm
- couple moteur :
   - exemple 6 (en Ampères) : 8-10A
   - exemple 7 (en Ampères) : 10-16A
- vitesse de tirage variable (épaisseurs de film entre 50 et 150 µm)

La mise en oeuvre permet de réaliser des films de différentes épaisseurs qui sont testés en perméabilité aux gaz O₂ et CO₂ et à la vapeur d'eau.
Les films sont conditionnés 48h à 23°C et 0%RH (humidité relative) avant d'être soumis à la détermination de leur perméabilité aux gaz O₂ et CO₂ et à la vapeur d'eau, selon les procédures décrites ci-dessous.

### Perméabilité à l'oxygène

Mesure du coefficient de transmission de l'oxygène selon la norme ASTM D3985 dans les conditions particulières suivantes.
Conditions de mesure :
- Température : 23°C
- Humidité : 0%RH
- Mesures avec 100"% d'oxygène sur 3 éprouvettes de 0,5dm²
- Temps de stabilisation : 24h
- Appareil de mesure : Oxtran 2/20

### Perméabilité au dioxyde de carbone

Mesure du coefficient de transmission du dioxyde de carbone selon le document ISO DIS 15105-2 Annexe B (méthode à détection chromatographique).
Conditions de mesure :
- Température : 23°C
- Humidité : 0%RH
- Mesures sur 3 éprouvettes de 0,5dm²
- Temps de stabilisation : 48h
- Appareil de mesure : Oxtran 2/20
Conditions chromatographiques :
- Four : 40°C
- Colonnes : Porapak Q

Détection par ionisation de flamme, le détecteur étant précédé par un four de méthanisation.
Etalonnage du chromatographe avec des gaz étalons à concentration connue en dioxyde de carbone.

### Perméabilité à la vapeur d'eau

Détermination du coefficient de transmission de la vapeur d'eau selon la norme NF H 00044 (appareil LYSSY).
Conditions de mesure :
- Température : 38°C
- Humidité : 90%RH
- Mesures sur 3 éprouvettes de 0,5dm2
- Etalonnage avec des films de référence à 26,5, 14 et 2,1 g/m².24h

### Résultats

La présence de charges ZrP à 2,6% (exemple 7) a un effet significatif sur la perméabilité au gaz et à la vapeur d'eau des films de nylon 6 (Tableau 2). Les éprouvettes testées sont de différentes épaisseurs entre 50 et 110 µm.

**Tableau 2**

| | **Ex. 6 (comparatif)** | **Ex. 7** | **Réduction par rapport à l'ex.6** | **Ex.8** | **Réduction par rapport à l'ex.6** |
|---|---|---|---|---|---|
| Perméabilité O₂ (cm³.mm/m².24h_{.}bar) | 1,06 | 0,34 | 0,32 | 0,19 | 0,18 |
| Perméabilité CO₂ (cm³.mm/m².24h.bar) | 4,83 | 1,05 | 0,22 | 0,53 | 0,11 |
| Perméabilité H₂0 (g.mm/m².24h) | 11,55 | 5,9 | 0,51 | 4,04 | 0,35 |

### Perméabilité à l'oxygène

Les résultats obtenus avec 2,6% d'alpha ZrP (exemple 7) donnent, à épaisseur comparable, une réduction de perméabilité à l'oxygène variant entre 61% (à 50 µm) et 66% (à 90 µm) par rapport au film sans alpha ZrP de l'exemple 6. Avec 4,2% d'alpha ZrP (exemple 8), la perméabilité à l'oxygène est réduite de 80% environ.

### Perméabilité au dioxyde de carbone

La perméabilité au dioxyde de carbone des films chargés 2,6% (exemple 7) et 4,2% (exemple 8) d'alpha ZrP est inférieure à celle des films PA6 sans additif (exemple 6). La réduction de perméabilité au dioxyde de carbone varie de 67% (à 50 µm) à 85% (à 90µm). Avec 4,2% d'alpha ZrP la perméabilité au dioxyde de carbone est réduite de 90% environ.

### Perméabilité à la vapeur d'eau

La présence de charge alpha ZrP au taux de 2,6% (exemple 7) dans les films de nylon 6 réduit également la perméabilité à la vapeur d'eau. La réduction de perméabilité à la vapeur d'eau varie de 33% (à 50 µm) à 48% (à 90 µm) par rapport à des films PA6 sans additif (exemple 6). Avec 4,2% d'alpha ZrP (exemple 8) la réduction de perméabilité est de 65%.

### Mesures d'absorption UV-visible

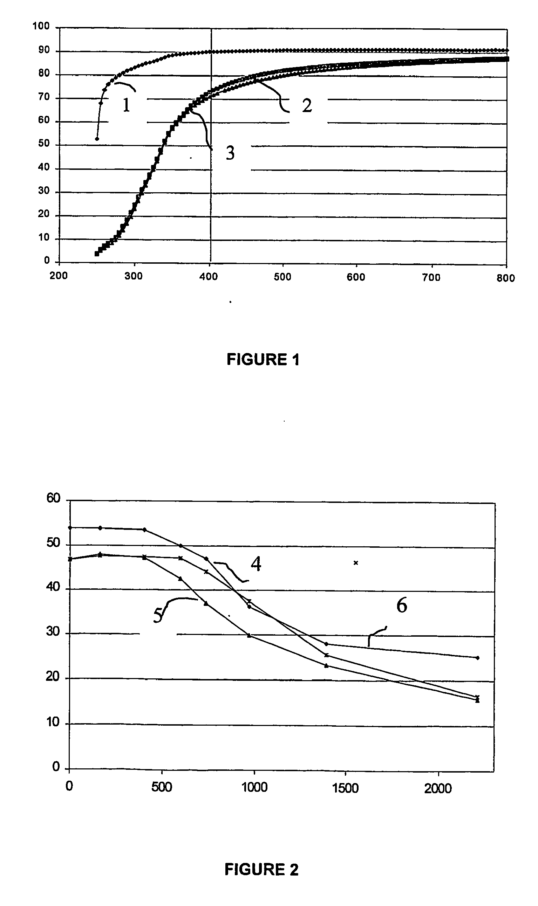

Les matériaux des exemples 6 à 8 obtenus en synthèse sont extrudés au travers d'une filière plate. Les films obtenus ont une épaisseur de 350 µm.
Les films sont analysés en transmission totale au L900 avec sphère d'intégration 150mm. La longueur d'onde varie entre 250 et 800nm. Les résultats sont mentionnés dans la Figure 1 dans laquelle la courbe 1 correspond à l'exemple 6, la courbe 2 à l'exemple 7 et la courbe 3 à l'exemple 8. Sur la Figure 1, les abscisses représentent la longueur d'onde (nm) et les ordonnées représentent la transmission (%).
La Figure 1 montre clairement que la présence de l'alpha ZrP modifie le spectre de transmission du polyamide sans additif. En l'occurrence, la charge absorbe dans l'UV (λ<400nm) et de manière moins importante dans le visible. On observe également que la transmission pour un polymère comprenant 4,2% de charge alpha ZrP est sensiblement équivalent à la transmission d'un polymère en contenant 2,6%.

### Résistance des matériaux au vieillissement

Les matériaux des exemples 6 à 8 obtenus en synthèse sont extrudés au travers d'une filière plate. Les films obtenus ont une épaisseur de 350 µm.
Le vieillissement artificiel est simulé dans un test réalisé avec un appareil Xenotest 1200 (lampes au Xenon). Les conditions d'essais sont les suivantes :
- Température panneau noir de 63°C
- Irradiance de 65W/m² (dans la zone 290-400nm)
- Alternance 102 minutes atmosphère sèche et 18 minutes atmosphère pluie
Les variations colorimétriques de l'échantillon sont suivies toutes les 200h environ par mesure au spectrocolorimètre Minolta 508-d (spéculaire inclus).
Le vieillissement des films se traduit par une perte de transparence caractérisée par une dégradation de la valeur du contraste. Les résultats sont mentionnés dans la Figure 2 dans laquelle la courbe 4 correspond à l"exemple 6, la courbe 5 à l'exemple 7 et la courbe 6 à l'exemple 8. Sur la Figure 2, les abscisses représentent les heures d'exposition et les ordonnées représentent le contraste.
Si l'on tient compte de la différence de contraste à l'origine (légère perte de transparence due à la présence des charges), on note que la présence de l'alpha ZrP dans le PA6 ne modifie pas la vitesse de dégradation du polymère.

### Exemples 9-11: Compositions de polyamide 11 comprenant des particules plaquettaires à base de phosphate de zirconium

On synthétise un polyamide 11 selon un procédé classique, en introduisant dans le milieu de polymérisation la dispersion aqueuse obtenue à l'exemple 2. La proportion de composé à base de phosphate de zirconium introduite est de 2 ou 4 % en poids par rapport à la masse du matériau (exemples 9 et 10). On synthétise également un polyamide 11 ne comprenant pas le composé de phosphate de zirconium (exemple 11, comparatif).
Après polymérisation, le polymère est mis en forme de granulés. Ceux ci sont lavés pour élimination du monomère résiduel puis sont séchés sous vide primaire (<0,5 mbar) pendant 16 à 110°C.
Le suivi des masses moyennes (tableau 1) des polymères obtenus montre que l'introduction de la charge n'a pas d'incidence néfaste sur le déroulement de la polymérisation

| **N° exemple** | **% composé introduit** | **MW** | | **MN** | |
|---|---|---|---|---|---|
| 9 | 2 | 74850 | g/mole | 30850 | g/mole |
| 10 | 4 | 71400 | g/mole | 30880 | g/mole |
| 11 | 0 | 70430 | g/mole | 26800 | g/mole |

### Caractérisation mécanique

On réalise des essais de flexion selon la norme ISO 178:93 ainsi que des essais de résistance aux chocs selon la norme ISO 179:93.

Les résultats obtenus sont résumés dans le tableau suivant.

| **Exemple** | **% Composé introduit** | **Module de flexion (E) en MPa** | **Choc Charpy à 23°c (KJ/m²) ISO 179:93-1eA** | **Choc Charpy à - 40°c (KJ/m²) ISO 179:93-1eU** |
|---|---|---|---|---|
| 9 | 2 | 1434 | 10 | 11.7 |
| 11 | 0 | 1143 | 12.5 | 13.2 |

### Perméabilité à l'essence M15 (60°c)

Principe : Platine DCI / GC bidimensionnelle :
Les matières volatiles sont extraites directement de l'échantillon par la technique de la platine DCI: Les matières volatiles sont désorbées par balayage d'azote à température contrôlée, puis concentrées dans un piège cryogénique rempli de Ténax®.
L'introduction dans la colonne chromatographique polaire est faite par réchauffage rapide du piège. Les matières volatiles sont entraînées par l'hélium dans la colonne, vers le détecteur FID.
Principe de la mesure : L'appareil de chromatographie en phase gazeuse bidimensionnel est utilisé en mode Headspace dynamique. Il permet d'analyser le flux de solvant traversant une membrane polymèrique durant un temps t de piégeage. La cellule de mesure (vial) doit être retournée dans le four de la platine DCI afin d'assurer un contact entre le polymère et l'essence. En sommant toutes les aires détectées en fonction du temps, on obtient alors la courbe des flux. On pourra donc en déduire les flux respectifs des différents solvants constituant l'essence étudiée (pente de la courbe en régime stationnaire) et le coefficient de perméabilité.

| | |
|---|---|
| Appareil | Platine DCI / GC bidimensionnel |
| Colonne | **INNOWAX / D=0.32mm / L=30m / ep=0.5**µ**m** 70°C-1mn / 10°C/mn / 130°C-12mn |
| Température four platine | **60°C** |
| Perméabilité | **Essence M15** |
| Surface d'essai | 19.41 mm² |
| Gaz balayage | Azote |
| Gaz vecteur | Hélium |
| Débit total colonne / split | 30 / 27.9 ml/mn |
| Pression colonne | 0.6 bar |
| Température détecteur FID | 280°C |

### Résultats :

L'essence M15 est constituée en volume de : 15% de Méthanol, 42.5% de Toluène, et 42.5% d'Isooctane (Triméthyl-2,2,4 pentane)

| Référence : FILMS PA11 | % composé introduit | **Flux total M15 g.mm / m².24h** | Flux MeOH g.mm /m².24h | Flux Toluène g.mm /m².24h | Flux Isooctane g.mm /m².24h |
|---|---|---|---|---|---|
| 11 | Témoin | **576** | 317 | 236 | 23 |
| | 0% | **713** | 411 | 260 | 42 |
| 9 | 2% | **304** | 209 | 89 | 5.4 |
| 10 | 4% | **159** | 118 | 38 | 2.8 |

L'incorporation d'environ 2% de composé (exemple 7) permet de diminuer d'un facteur 2 le flux à l'essence M 15 à 60°C du PA11 témoin (exemple 9).

### Perméabilité à l'oxygène

Conditions expérimentales : Les mesures sont réalisées sur I'Oxtran 1000 H.
Les tests ont été réalisés à l'aide du réducteur de surface. Les valeurs données dans les tableaux de résultats sont toutes ramenées à une épaisseur de 50 µm.
Les films ont été conditionnés de la manière suivante :
→ Pour les mesures réalisées à 23°C sous 0% HR : deux jours sous oxygène.
→ Pour les mesures réalisées à 23°C sous 75% HR : trois jours sous oxygène.

Résultats :
Mesures réalisées à 23°C et à 0% HR.

| Films | % de composé | Epaisseur (µm) | Ecart-type | Valeur du flux à l'oxygène (cc/m².24h) | Valeur du flux à l'oxygène (cc.50µm/m².24h) |
|---|---|---|---|---|---|
| Exemple 11 | 0 % | 54 | 3.7 | 264.8 | 286.0 |
| Exemple 9 | 2% | 77.3 | 11,9 | 133.6 | 206.5 |
| Exemple 10 | 4% | 83.4 | 30.6 | 125.1 | 208.7 |

Mesures réalisées à 23°C et à 75% HR.

| Films | % composé introduit | Epaisseur (µm) | Ecart-type | Valeur du flux à l'oxygène (cc/m².24h) | Valeur du flux à l'oxygène (cc.50µm/m².24h) |
|---|---|---|---|---|---|
| Exemple 11 | 0 | 54 | 3.7 | 302.6 | 326.8 |
| Exemple 9 | 2% | 77.3 | 11.9 | 145.8 | 225.4 |
| Exemple 10 | 4% | 83.4 | 30.6 | 141.3 | 235.7 |

## Revendications

1. Matériau à propriétés barrières aux gaz et liquide élevées **caractérisé en ce qu'**il comprend une matrice thermoplastique et un composé nanoparticulaire à base de phosphate de zirconium et/ou de titane présentant des feuillets élémentaires de facteur de forme égal ou supérieur à 250.

2. Matériau barrière selon la revendication 1, **caractérisé en ce que** la matrice thermoplastique est choisie dans le groupe comprenant les polyamides, le polyméthylméthacrylate, le PET, le polystyrène, les copolyoléfines telles que l'EVA , les mélanges et copolymères à base de ces (co)polymères

3. Matériau barrière selon l'une des revendications 1 ou 2, **caractérisé en ce que** la matrice thermoplastique est un polyamide choisi dans le groupe comprenant le polyamide 6, le polyamide 66, le polyamide 11, le polyamide 12, les mélanges et copolymères à base de ces polyamides

4. Matériau barrière selon l'une des revendications précédentes, **caractérisé en ce que** la proportion en poids du composé à base de phosphate de zirconium et/ou de titane dans le matériau est inférieure ou égale à 5%.

5. Matériau barrière selon l'une des revendications précédentes, **caractérisé en ce qu'**au moins une partie du composé à base de phosphate de zirconium et/ou de titane est dispersée sous forme de feuillets.

6. Matériau barrière selon l'une des revendications précédentes, **caractérisé en ce que** le composé à base de phosphate de zirconium et/ou de titane présente des feuillets élementaires de facteur de forme supérieur ou égal à 500.

7. Matériau barrière selon l'une des revendications précédentes, **caractérisé en ce qu'**il est obtenu par introduction dans la matrice ou dans le milieu de polymérisation de la matrice d'un composé à base de phosphate de zirconium et/ou de titane présentant une distance interfeuillets inférieure ou égale à 15Å.

8. Matériau barrière selon la revendication 7, **caractérisé en ce que** la distance interfeuillets du composé à base de phosphate de zirconium et/ou de titane est inférieure ou égale à 13 Å

9. Matériau barrière selon la revendication 7 ou 8, **caractérisé en ce que** le composé à base de phosphate de zirconium et/ou de titane comprend un composé minéral ou organique comprenant au moins une fonction susceptible de réagir avec les fonctions acides du phosphate de zirconium et/ou de titane.

10. Matériau barrière selon la revendication 9, **caractérisé en ce que** le composé minéral ou organique est sous forme cationique.

11. Matériau barrière selon la revendication 10, **caractérisé en ce que** le composé minéral est l'ion Na⁺.

12. Matériau barrière selon l'une des revendications 9 à 11, **caractérisé en ce que** le composé minéral ou organique comprend une fonction susceptible de réagir avec les fonctions acides du phosphate de zirconium et/ou de titane.

13. Matériau barrière selon la revendication 12, **caractérisé en ce que** la fonction susceptible de réagir est une fonction amine.

14. Matériau barrière selon la revendication 13, **caractérisé en ce que** le composé organique est une monoamine.

15. Matériau barrière selon la revendication 13, **caractérisé en ce que** le composé organique est un aminoacide ou un lactame.

16. Matériau barrière selon l'une des revendications 9 à 11, **caractérisé en ce que** le composé organique est un composé selon la formule (I) suivante :
A-R-B (I)
dans laquelle
A et B sont des fonctions, identiques ou différentes, susceptibles de réagir avec les fonctions acides du phosphate de zirconium et/ou de titane,
R est un radical hydrocarboné aliphatique, cycloaliphatique ou aromatique, substitué ou non, comprenant de 2 à 20 atomes de carbone, et pouvant comprendre des hétéroatomes

17. Matériau barrière selon la revendication 16, **caractérisé en ce que** les fonctions A et B sont des amines.

18. Matériau barrière selon la revendication 17, **caractérisé en ce que** le composé (I) est choisi parmi l'hexaméthylène diamine, la méthyl-2-pentaméthylène diamine, la métaxylène diamine

19. Matériau barrière selon l'une des revendications 9 à 18, **caractérisé en ce que** le rapport molaire α entre le nombre de moles de fonctions susceptibles de réagir du composé minéral ou organique et le nombre de moles du phosphate de zirconium et/ou de titane étant compris entre 0,1 et 0,8

20. Matériau barrière selon la revendication 19, **caractérisé en ce que** le rapport α est compris entre 0,4 et 0,6

21. Matériau barrière selon la revendication 20, **caractérisé en ce que** le rapport α est sensiblement égal à 0,5.

22. Matériau barrière selon l'une des revendications 7 à 21, **caractérisé en ce que** le composé à base de phosphate de zirconium et/ou de titane, éventuellement dispersé dans un liquide, est obtenu par le procédé comprenant les étapes successives suivantes :
a) Précipitation en milieu acide d'un composé à base de phosphate de zirconium et/ou de titane, à partir d'acide phosphorique et d'un composé du zirconium et/ou d'un composé à base de titane ou de composés mixtes à base de titane et de zirconium, le titane et/ou le zirconium étant au degré d'oxydation IV
b) Cristallisation du composé
c) Traitement du composé cristallisé, en milieu liquide, à pH compris entre 3 et 9.

23. Matériau barrière selon l'une des revendications 7 à 22, **caractérisé en ce que** l'on introduit une solution aqueuse du composé à base de phosphate de zirconium et/ou de titane dans le milieu de polymérisation de la matrice.

24. Films, tubes, corps creux, réservoirs obtenus par mise en forme d'un matériau selon l'une des revendications 1 à 23

## Claims

1. Material with high barrier properties toward gases and liquids, **characterized in that** it comprises a thermoplastic matrix and a nanoparticulate compound based on zirconium and/or titanium phosphate exhibiting individual leaves with an aspect ratio of equal to or greater than 250.

2. Barrier material according to Claim 1,
**characterized in that** the thermoplastic matrix is chosen from the group consisting of polyamides, polymethyl methacrylate, PET, polystyrene, copolyolefins, such as EVA, and the blends and copolymers based on these (co)polymers.

3. Barrier material according to either of Claims 1 and 2, **characterized in that** the thermoplastic matrix is a polyamide chosen from the group consisting of polyamide-6, polyamide-6,6, polyamide-11, polyamide-12, and the blends and copolymers based on these polyamides.

4. Barrier material according to one of the preceding claims, **characterized in that** the proportion by weight of the compound based on zirconium and/or titanium phosphate in the material is less than or equal to 5%.

5. Barrier material according to one of the preceding claims, **characterized in that** at least a portion of the compound based on zirconium and/or titanium phosphate is dispersed in the form of leaves.

6. Barrier material according to one of the preceding claims, **characterized in that** the compound based on zirconium and/or titanium phosphate exhibits individual leaves with an aspect ratio of greater than or equal to 500.

7. Barrier material according to one of the preceding claims, **characterized in that** it is obtained by introduction, into the matrix or into the medium for the polymerization of the matrix, of a compound based on zirconium and/or titanium phosphate exhibiting an interleaf distance of less than or equal to 15Å.

8. Barrier material according to Claim 7, **characterized in that** the interleaf distance of the compound based on zirconium and/or titanium phosphate is less than or equal to 13Å.

9. Barrier material according to Claim 7 or 8, **characterized in that** the compound based on zirconium and/or titanium phosphate comprises an inorganic or organic compound comprising at least one functional group capable of reacting with the acid functional groups of the zirconium and/or titanium phosphate.

10. Barrier material according to Claim 9, **characterized in that** the inorganic or organic compound is in the cationic form.

11. Barrier material according to Claim 10, **characterized in that** the inorganic compound is the Na⁺ ion.

12. Barrier material according to one of Claims 9 to 11, **characterized in that** the inorganic or organic compound comprises a functional group capable of reacting with the acid functional groups of the zirconium and/or titanium phosphate.

13. Barrier material according to Claim 12, **characterized in that** the functional group capable of reacting is an amine functional group.

14. Barrier material according to Claim 13, **characterized in that** the organic compound is a monoamine.

15. Barrier material according to Claim 13, **characterized in that** the organic compound is an amino acid or a lactam.

16. Barrier material according to one of Claims 9 to 11, **characterized in that** the organic compound is a compound according to the following formula (I):
A-R-B (I)
in which
A and B are identical or different functional groups capable of reacting with the acid functional groups of the zirconium and/or titanium phosphate,
R is a substituted or unsubstituted aliphatic, cycloaliphatic or aromatic hydrocarbonaceous radical comprising from 2 to 20 carbon atoms which can comprise heteroatoms.

17. Barrier material according to Claim 16, **characterized in that** the functional groups A and B are amines.

18. Barrier material according to Claim 17, **characterized in that** the compound (I) is chosen from hexamethylenediamine, 2-methylpentamethylene-diamine or meta-xylenediamine.

19. Barrier material according to one of Claims 9 to 18, **characterized in that** the molar ratio α of the number of moles of functional groups capable of reacting of the inorganic or organic compound to the number of moles of the zirconium and/or titanium phosphate is between 0.1 and 0.8.

20. Barrier material according to Claim 19, **characterized in that** the ratio α is between 0.4 and 0.6.

21. Barrier material according to Claim 20, **characterized in that** the ratio α is substantially equal to 0.5.

22. Barrier material according to one of Claims 7 to 21, **characterized in that** the compound based on zirconium and/or titanium phosphate, optionally dispersed in a liquid, is obtained by the process comprising the following successive stages:
a) precipitation in acidic medium of a compound based on zirconium and/or titanium phosphate, starting from phosphoric acid and from a zirconium compound and/or from a titanium-based compound or from mixed compounds based on titanium and on zirconium, the titanium and/or the zirconium being in the IV oxidation state,
b) crystallization of the compound,
c) treatment of the crystallized compound, in liquid medium, at a pH of between 3 and 9.

23. Barrier material according to one of Claims 7 to 22, **characterized in that** an aqueous solution of the compound based on zirconium and/or titanium phosphate is introduced into the medium for the polymerization of the matrix.

24. Films, pipes, hollow bodies or tanks obtained by forming a material according to one of Claims 1 to 23.

## Patentansprüche

1. Material mit hohen Gas- und Flüssigkeitsbarriereeigenschaften, **dadurch gekennzeichnet, daß** es eine thermoplastische Matrix und eine nanopartikuläre Verbindung auf Basis von Zirconium- und/oder Titanphosphat, die Elementarlamellen mit einem Formfaktor größer gleich 250 aufweist, umfaßt.

2. Barrierematerial nach Anspruch 1, **dadurch gekennzeichnet, daß** die thermoplastische Matrix aus der Gruppe bestehend aus Polyamiden, Polymethylmethacrylat, PET, Polystyrol, Copolyolefinen wie EVA und Mischungen und Copolymeren auf Basis dieser (Co)polymere ausgewählt ist.

3. Barrierematerial nach einem der Ansprüche 1 oder 2, **dadurch gekennzeichnet, daß** es sich bei der thermoplastischen Matrix um ein Polyamid aus der Gruppe bestehend aus Polyamid-6, Polyamid-66, Polyamid-11, Polyamid-12 und Mischungen und Copolymeren auf Basis dieser Polyamide handelt.

4. Barrierematerial nach einem der vorhergehenden Ansprüche, **dadurch gekennzeichnet, daß** der Gewichtsanteil der Verbindung auf Basis von Zirconium- und/oder Titanphosphat in dem Material kleiner gleich 5% ist.

5. Barrierematerial nach einem der vorhergehenden Ansprüche, **dadurch gekennzeichnet, daß** mindestens ein Teil der Verbindung auf Basis von Zirconium- und/oder Titanphosphat in Form von Lamellen dispergiert ist.

6. Barrierematerial nach einem der vorhergehenden Ansprüche, **dadurch gekennzeichnet, daß** die Verbindung auf Basis von Zirconium- und/oder Titanphosphat Elementarlamellen mit einem Formfaktor größer gleich 500 aufweist.

7. Barrierematerial nach einem der vorhergehenden Ansprüche, **dadurch gekennzeichnet, daß** es durch Eintragen einer Verbindung auf Basis von Zirconium- und/oder Titanphosphat mit einem Lamellenabstand kleiner gleich 15 Ǻ in die Matrix oder in das Medium zur Polymerisation der Matrix erhalten wird.

8. Barrierematerial nach Anspruch 7, **dadurch gekennzeichnet, daß** der Lamellenabstand der Verbindung auf Basis von Zirconium- und/oder Titanphosphat kleiner gleich 13 Ǻ ist.

9. Barrierematerial nach Anspruch 7 oder 8, **dadurch gekennzeichnet, daß** die Verbindung auf Basis von Zirconium- und/oder Titanphosphat eine anorganische oder organische Verbindung mit mindestens einer Funktion, die gegenüber den sauren Funktionen des Zirconium- und/oder Titanphosphats reaktionsfähig ist, umfaßt.

10. Barrierematerial nach Anspruch 9, **dadurch gekennzeichnet, daß** die anorganische oder organische Verbindung in kationischer Form vorliegt.

11. Barrierematerial nach Anspruch 10, **dadurch gekennzeichnet, daß** es sich bei der anorganischen Verbindung um das Na⁺-Ion handelt.

12. Barrierematerial nach einem der Ansprüche 9 bis 11, **dadurch gekennzeichnet, daß** die anorganische oder organische Verbindung eine Funktion, die gegenüber den sauren Funktionen des Zirconium- und/oder Titanphosphats reaktionsfähig ist, umfaßt.

13. Barrierematerial nach Anspruch 12, **dadurch gekennzeichnet, daß** es sich bei der reaktionsfähigen Funktion um eine Aminfunktion handelt.

14. Barrierematerial nach Anspruch 13, **dadurch gekennzeichnet, daß** es sich bei der organischen Verbindung um ein Monoamin handelt.

15. Barrierematerial nach Anspruch 13, **dadurch gekennzeichnet, daß** es sich bei der organischen Verbindung um eine Aminosäure oder ein Lactam handelt.

16. Barrierematerial nach einem der Ansprüche 9 bis 11, **dadurch gekennzeichnet, daß** es sich bei der organischen Verbindung um eine Verbindung der folgenden Formel (I) handelt:
A-R-B (I)
worin
A und B für gleiche oder verschiedene Funktionen, die gegenüber den sauren Funktionen des Zirconium- und/oder Titanphosphats reaktionsfähig sind, stehen,
R für einen gegebenenfalls substituierten aliphatischen, cycloaliphatischen oder aromatischen Kohlenwasserstoffrest, der 2 bis 20 Kohlenstoffatome enthält und Heteroatome enthalten kann, steht.

17. Barrierematerial nach Anspruch 16, **dadurch gekennzeichnet, daß** es sich bei den Funktionen A und B um Amine handelt.

18. Barrierematerial nach Anspruch 17, **dadurch gekennzeichnet, daß** die Verbindung (I) unter Hexamethylendiamin, Methyl-2-pentamethylendiamin und meta-Xyloldiamin ausgewählt ist.

19. Barrierematerial nach einem der Ansprüche 9 bis 18, **dadurch gekennzeichnet, daß** das Molverhältnis α zwischen der Molzahl der reaktionsfähigen Funktionen der anorganischen oder organischen Verbindung und der Molzahl des Zirconium- und/oder Titanphosphats zwischen 0,1 und 0,8 liegt.

20. Barrierematerial nach Anspruch 19, **dadurch gekennzeichnet, daß** das Verhältnis α zwischen 0,4 und 0,6 liegt.

21. Barrierematerial nach Anspruch 20, **dadurch gekennzeichnet, daß** das Verhältnis α im wesentlichen gleich 0,5 ist.

22. Barrierematerial nach einem der Ansprüche 7 bis 21, **dadurch gekennzeichnet, daß** die Verbindung auf Basis von Zirconium- und/oder Titanphosphat, gegebenenfalls in einer Flüssigkeit dispergiert, durch das Verfahren mit den folgenden aufeinanderfolgenden Schritten erhalten wird:
a) Ausfällung einer Verbindung auf Basis von Zirconium- und/oder Titanphosphat in saurem Medium ausgehend von Phosphorsäure und einer Zirconiumverbindung und/oder einer Verbindung auf Basis von Titan oder gemischten Verbindungen auf Basis von Titan und Zirconium, wobei das Titan und/oder das Zirconium in der Oxidationsstufe IV vorliegt,
b) Kristallisation der Verbindung,
c) Behandlung der kristallinen Verbindung in flüssigem Medium bei einem pH-Wert zwischen 3 und 9.

23. Barrierematerial nach einem der Ansprüche 7 bis 22, **dadurch gekennzeichnet, daß** eine wäßrige Lösung der Verbindung auf Basis von Zirconium- und/oder Titanphosphat in das Medium zur Polymerisation der Matrix eingetragen wird.

24. Folien, Rohre, Hohlkörper oder Behälter, erhalten durch Formen eines Materials nach einem der Ansprüche 1 bis 23.
